(19) Europäisches Patentamt
European Patent Office
Office européen des brevets

(11) **EP 3 240 046 A1**

(12) **EUROPEAN PATENT APPLICATION**

(43) Date of publication:
**01.11.2017 Bulletin 2017/44**

(51) Int Cl.:
**H01L 31/054** (2014.01)     **G02B 5/18** (2006.01)
**F21V 8/00** (2006.01)     **H02S 40/22** (2014.01)

(21) Application number: **16167762.0**

(22) Date of filing: **29.04.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **BASF Coatings GmbH**
**48165 Münster (DE)**

(72) Inventors:
• **Bujard, Patrice**
**1784 Courtepin (CH)**
• **Gallinet, Benjamin**
**4132 Muttenz (CH)**
• **Stalder, Martin**
**4104 Oberwil (CH)**
• **von Muehlenen, Adrian**
**4800 Zofingen (CH)**
• **Hafner, Andreas**
**4460 Gelterkinden (CH)**
• **Gebers, Jan**
**4054 Basel (CH)**
• **Ferrini, Rolando**
**3006 Bern (CH)**
• **Luetolf, Fabian**
**4312 Magden (CH)**
• **Basset, Guillaume**
**68330 Huningue (FR)**
• **Kues, Jan-Bernd**
**48165 Münster (DE)**
• **Lenz, Joerg**
**48165 Münster (DE)**

(74) Representative: **BASF IP Association**
**BASF SE**
**G-FLP-C006**
**67056 Ludwigshafen (DE)**

(54) **SOLAR LIGHT COLLECTOR**

(57)     A light collection and concentration system comprises a light transport structure (101), which light transport structure comprises a layer or a multitude of layers medium refractive index $n_w$ sandwiched between an upper layer of a material of low refractive index $n_c$ (102) and a lower reflecting surface (101 b), which light transport structure further comprises one or more grating couplers (104) embedded in its material of medium refractive index $n_w$, wherein each grating coupler comprises a diffraction grating (3) of the period $p_g$ covered by a coating material (5), which coating material is selected from dielectrics of high refractive index and metals, characterized in that a top layer of medium refractive index $n_w$ and of thickness from the range 0.1 to 5 micrometer, especially 0.4 to 3 micrometer, is arranged between the grating couplers (104) and the upper layer of a material of low refractive index $n_c$ (102), and/or the grating period $p_g$, and refractive indices $n_w$ and $n_c$ are arranged to satisfy the condition: 300 nm < 0.5 $p_g$ ($n_w$ + $n_c$) < 1100 nm.

Fig. 1

EP 3 240 046 A1

**Description**

Present invention relates to a light collection and concentration system comprising a light transport structure, which contains provisions for efficient light-incoupling and light guiding in the desired direction.

While solar radiation provides a high amount of energy, usage thereof finds its limitations inter alia as a result of the variation of the incidence angle over the day and the low concentration of the irradiation. In order to improve its usage, for example for directing a more intense and more constant light beam onto a photovoltaic cell, devices have been proposed, which focus the sunlight within a certain range of inclination angles by means of lenses or lens arrays and/or direct it into a waveguide for transport:

Karp et al., Optics Express 18, 1122 (2010), propose a solar light concentrator where sunlight collected by each lens of a two-dimensional lens array is coupled into a shared, planar, fluoropolymer cladded waveguide using micrometer-sized specular mirror planes placed at each lens focus on the opposite side of the waveguide. Similar systems are described by Bouchard and Thibault, Optics Express 22, A248 (2014), Shieh and Su, Proc. SPIE 8108, 81080H (2011), or WO 2010/033859, US 2010/278480.

US 2012/262769 proposes a solar coupler focusing incoming light by means of a lens array onto holographic elements arranged on the cladding of an optical fiber. WO 2013/005231 provides gratings on both sides of a planar glass waveguide.

A light coupling system of WO 2014/016343 comprises a coupler element on a waveguide, which coupler element is a grating covered with a high refractive index coating.

WO 2015/062641 describes an efficient element for light coupling into a waveguide in a preferred direction, which is based on symmetric basic gratings, coated asymmetrically with a high refractive index material. Similar gratings have been disclosed by Lütolf et al., Optics Letters Vol. 39, Issue 23, pp. 6557-6560 (2014).

Known light collecting systems often lack efficiency due to undirected incoupling into the waveguide, undesired outcoupling effects, which occur when captured light hits a coupling element on the waveguide wall from inside. Manufacturing may be challenging due to minimum requirements for alignment of lens arrays and incoupling elements.

It has now been found that an improved efficiency of a light collector may be obtained by embedding coupler elements such as gratings in a certain position within the waveguide, by using coupler elements comprising gratings inhomogeneously (i.e. asymmetrically) coated, and/or by further concentrating the light once captured in the waveguide by narrowing and/or bundling of the waveguide.

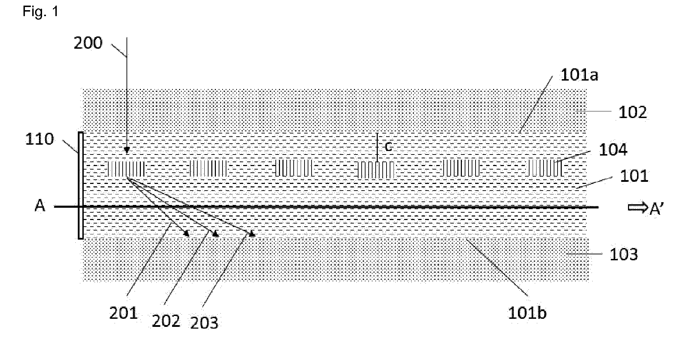

The invention thus primarily pertains to a light collection and concentration system comprising a light transport structure (101), which light transport structure comprises a layer or a multitude of layers of a material of medium refractive index $n_w$ sandwiched between an upper layer of low refractive material (102) and a lower reflecting surface (101 b), which may be the surface of a reflecting layer and/or layer of low refractive material (103) or the lower surface of the light transport structure to the ambient atmosphere. The low refractive material is of refractive index $n_c$. The light transport structure further comprises one or more grating couplers (104) embedded in its material of medium refractive index $n_w$, wherein each grating coupler comprises a diffraction grating (3) of the period $p_g$ covered, at least in part, by a coating material (5), which coating material is selected from dielectrics of high refractive index and metals (in summary herein referred to as HRI material). The light collection and concentration system of the invention is primarily characterized by the positioning of the grating couplers comprising the coated gratings, which are embedded by a top layer thickness (c) from the range 0.1 to 5 micrometer (see Fig. 1); said top layer thickness (c) is identical with the distance from the upper end of the grating coupler to the top surface (101 a) of the light transport structure (101). Especially preferred is an embedding of the grating couplers by a top layer thickness (c) from the range 0.4 to 3 micrometer. In the following, the light transport structure (101) is also denoted as light guide; it may comprise several index-matching layers, e.g. of polymer materials such as PMMA or glass. The lower reflecting surface can be realized by a layer (103) in form of a metallic reflector, e.g. a metal film, sheet or foil, or layer of an evaporated metal; the metal is, for example, selected from Al, Ag, Au, Cr, Ni, Sn, and suitable alloys. The lower reflecting surface can also be realized by a material adjacent to the light guide (101), which is is of low refractive index and thereby provides total internal reflection (TIR) within the light guide; such materials may be the low refractive material used for layer (102), or may be gas (such as the ambient air). In the following, the low refractive material used for layer (102), and potentially useful for forming layer (103), is also referred to as "cladding" or "cladding material", the respective layers as "cladding" or "cladding layer".

Refractive indices (also mentioned as "index") are as determined for a radiation of 589 nm (sodium D line), if not indicated otherwise. The terms "low refractive index" (LRI), "medium refractive index" and "high refractive index" (HRI) as used for the present invention are relative to each other, such that a light collection and concentration system contains materials of these low, medium and high refractive properties in a way that light permeating from the layer of low refractivity into the layer of medium refractivity or vice versa, or from the layer of medium refractivity into the layer of high refractivity or vice versa, shows a detectable refraction; typically, the difference between the low refractive index and the medium refractive index (i.e. the difference $(n_w - n_c)$) is 0.2 or more, e.g. from the range 0.2 to 0.7, especially 0.25 to 0.5, and the difference between the medium refractive index and the high refractive index is 0.2 or more, e.g. from the range 0.2 to 0.8. In typical embodiments, the term "low refractive index" denotes nc from the range 1.05 to less than 1.4, e.g. 1.05 to 1.3; and/or the term "medium refractive index" denotes an nw from the range 1.4 to 1.8, especially 1.45 to 1.7; and/or the term "high refractive index" denotes a refractive index larger than 1.8, e.g. from the range 1.9 to 2.3, preferably larger than 2, such as the refractive index of ZnS.

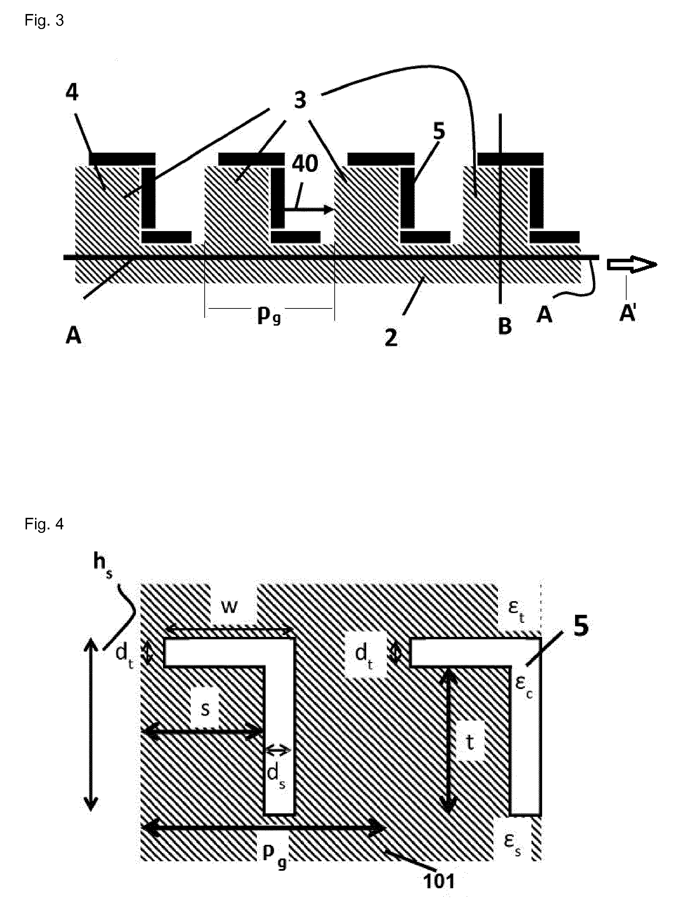

Couplers (104) are based on gratings (3), whose peaks and trenches are typically arranged in lines extending in direction about rectangular to the desired direction of light propagation within the light transport structure (101). Couplers (104), which carry a symmetrical coating (5), thus generally lead to an in-coupling of incident light (i.e. light (200) entering through the upper cladding (102) and striking the coupler) in both main directions rectangular to the original grating lines (i.e. direction A', see Fig. 1, as well as the opposite direction). Due to the diffractive nature of the couplers, the coupling angle depends on the wavelength; for example, red rays (203) may be redirected with a higher angle than green (202) and blue (201) rays. In order to further direct light into direction A', one side of the present light transport structure may be equipped with a mirror (optional reflector (110)). In a preferred embodiment, the grating couplers (104) show an asymmetry in direction A' (i.e. lack the symmetry element of a mirror plane standing parallel to the grating and rectangular on plane A); the asymmetry is generally achieved in that the coupler comprising the diffraction grating (3) of the period $p_g$ is asymmetrically (inhomogenously) covered by the coating material (5), an example is shown in present Fig. 3. The coupler thus provides in-coupling of the light and propagation in a preferred direction (indicated by arrow A' in Fig. 1). The preferred asymmetric coupler has a broken symmetry, so that more light is diffracted in a preferred order (for example + 1st order). Each coupler (104) may contain the coating (5) as a continous layer (i.e. covering more than one or all grating peaks and trenches of the coupler), or as a discontinous (interrupted) layer (as shown inter alia in present figures 3-6 and 8).

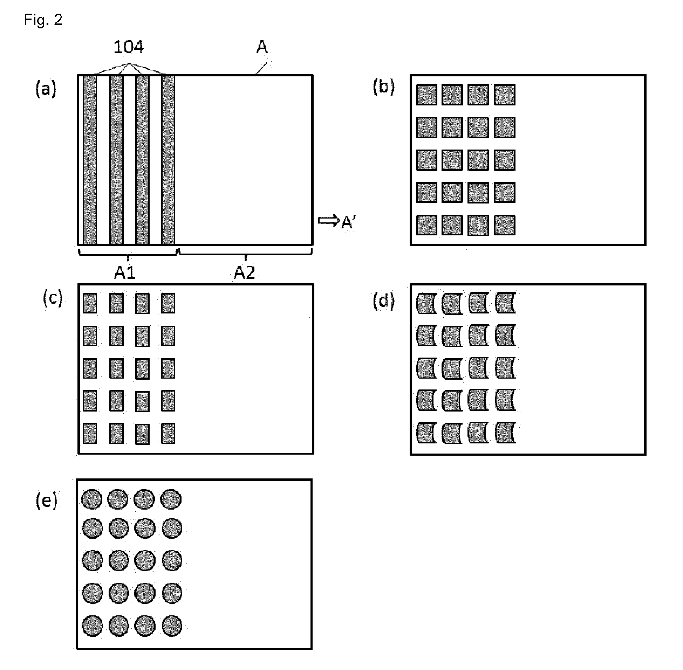

Asymmetric grating couplers (104) generally conform with couplers described in WO 2015/062641, whose Fig. 3 gives a schematic example (cross section) of a coupler structure useful within the present invention. The coupler comprises a HRI coating material (5) arranged asymmetrically on a patterned substrate with period $p_g$. The embedded structure shown in present Fig. 4 is conveniently obtained on the basis of a diffraction grating (3) in the optical substrate, which is then coated with the HRI material to obtain the required asymmetry and, preferably, interruptions in the coating layer, and finally coated with a material matching the index of the optical substrate (i.e. an optical material of medium refractive index). In a typical embodiment, the diffraction grating and thus each grating coupler linearly extends over a certain length, e.g. over the whole side of area A1 rectangular to direction A' as indicated in Fig. 2 (a). Alternatively, grating couplers may also be arranged in form of other 2-dimensional patterns, e.g. chessboard-like (see variants b-e given in Fig. 2).

The coating material (5) is preferably selected from dielectrics of high refractive index and metals (HRI materials). In certain cases, the present core layer may contain the coating material (5) not only on the grating, but additionally in regions between the grating couplers; this may be advantageous, especially in view of manufacturing, in case that the HRI coating material is a dielectric material and/or is a thin (i.e. of thickness about 1 to 20 nm) metal coating.

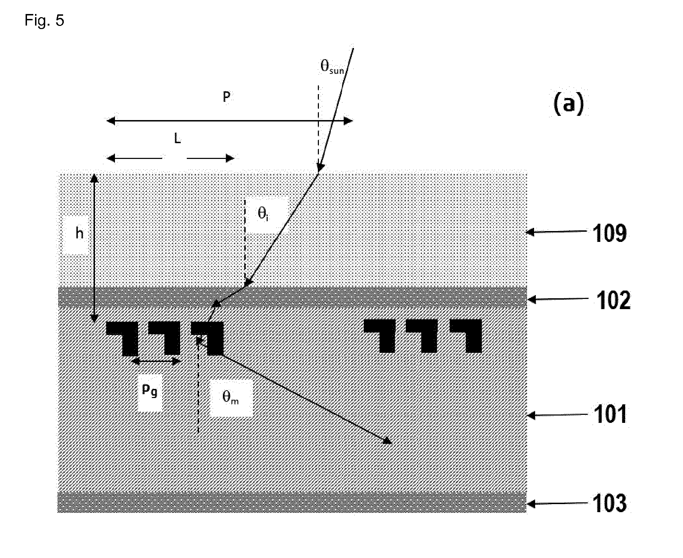

The term "fill factor" denotes the total area of light collecting elements comprising grating couplers (104) divided by the total area of the present light collection and concentration system comprising grating couplers. In case of linear grating couplers (i.e. gratings arranged as stripes across A1, see Fig. 2a) of width L arranged in a period P (as schematically shown in Fig. 5), the fill factor (FF) is represented by the ratio L/P. In the case of square gratings (Fig. 2b), FF = $L^2/P^2$. In the case of rectangles of dimensions L and L', FF = LL'/P (Fig. 2c). For circles or radius R, FF = $\pi R^2/P$.

In the light collection and concentration system of the invention, the fill factor (i.e. the fraction of the area of light collection (A1) comprising couplers (104)) typically may reach up to 0.6, preferably it is from the range 0.01 to about 0.5, more preferably 0.02 to 0.5, for example about 0.05 to 0.4.

The term "index-matching" or "matching refractive indices" characterizes a selection of materials showing similar or same refractive index to avoid light reflection at the interface between both materials; typically, index-matching requires deviation of refractive index between 2 materials to be smaller than 0.1, especially smaller than 0.05.

The light collection and concentration system of the invention allows for effective in-coupling of light into an optical substrate, which serves as the light transport structure (101). The optical substrate (also referred to as waveguide and as core layer), and thus the light transport structure, typically is provided in form of a panel, sheet or film, whose thickness may range from about one micrometer up to one or two centimeter; typical ranges are, for example, 5 to 200 micrometer for a light transporting film, or 0.5 to 10 mm for a light transporting sheet or panel. The system thus allows for propagation of in-coupled light into a direction different from the incident light, e.g. deviating 30 to 110 degrees from the direction of incidence, for example about rectangular to the incident light.

Due to good optical properties and high transmittance of the light transport structure (101) and the low refractive cladding, a typical embodiment of the light collection and concentration system of the invention comprising a low refractive cladding (102 and 103) on both sides of the light transport structure (101) has a high transparency of 50 % or more, often about 70-80 % transparency, which allows application in fields where transparency is required, for example windows, transparent facade elements, covers for solar cells or panels, or elements of such panels.

In another embodiment, the light collection and concentration system of the invention comprises, opposite to the site of light incidence, a non-transparent reflective cladding (103) such as a white diffusive cladding, or metallic reflecting cladding. In this embodiment, the structure of the invention has no transparency, which may be accompanied by low diffusive translucency or zero translucency; in the latter case, the only light transmitted is in-coupled or reflected.

The system provides means, by which light, such as direct sunlight or light concentrated from a primary light concentrator, is coupled into the core (i.e. the light transport structure 101) and directed in a desired propagation direction in the light transport structure towards both exit-ends or preferably, as indicated by direction A' in Fig. 1, one exit-end of the transport structure. For this purpose, the light transport structure contains one or more sections functioning as light collecting element, which allows light to enter into the core material through a transparent cladding of LRI material. As noted, the light collecting element comprises one or more, preferably a plurality of, grating couplers as a light directing structures embedded in the core material.

Light coupled into the waveguide (i.e. present core layer functioning as light transport structure 101) stays confined in the core material after diffraction from the grating due to reflection at the interface core layer/cladding (total internal reflection, TIR). Light entering through the upper cladding (102) and striking a grating coupler is diffracted by angle $\theta_m$ (see Fig. 5), where m is a signed integer qualifying the order. The order ranges typically from -2 to 2, preferably from -1 to 1. For in-coupling, the light gets diffracted at least by 1st order. The central wavelength ($\lambda_{center}$) and the bandwidth (delta lambda, $\Delta\lambda$) of thus in-coupled light are respectively given by

$$\lambda_{center} = \frac{n_c + n_w}{2} p_g$$

$$\Delta\lambda = (n_w - n_c) p_g$$

($n_c$ is the refractive index of the cladding, $n_w$ is the refractive index of the light guide, $\lambda$ is the wavelength of in-coupled light, and $p_g$ is the grating period). Given an orientation angle $\theta$ (measured in °) of the concentration system with respect to the earth surface, $p_g$, $n_w$ and $n_c$ are advantageously arranged to satisfy the condition:

$$300 \text{ nm} < 0.5 \, p \, (nw + nc - 2\sin(\theta - 40°)) < 1100 nm$$

Thus, for effective in-coupling of visible light, grating period $p_g$ and materials for the core layer and the cladding should be chosen to provide a central wavelength ($0.5 \, p_g \, (n_w + n_c)$) within the range from 300 to 1100 nm, preferably within the range 300 to 900 nm, especially 400 to 800 nm.

Brief description of figures:

Figure 1 shows a schematic cross section of the present light collection and concentration system comprising the light collecting element with several grating couplers (104) embedded in the core layer (101) with distance (c) to the upper cladding (102); in the embodiment shown in Fig. 1, the lower reflecting surface (101 b) is realized by attaching a lower cladding or reflector layer (103), and, as further optional feature, a reflector (110) on the end of the light guite opposite to the preferred direction of light propagation (A'). Light (200) entering the structure vertically through the upper cladding (102) gets refracted (201, 202, 203) by couplers (104) into a preferred direction (A') in case that asymmetric couplers are used.

Figure 2 gives a schematic top view of the present light collection and concentration system from the side of incoming light, indicating the light collecting element with several grating couplers (104) arranged as stripes in area A1 (variant a) or with various geometries, examples of which are shown as variants (b) to (e); transport or dissipation area A2 is optional.

Figure 3 shows a schematic cross section of one grating coupler (104) in a state of manufacturing, where the upper part of the core layer of medium refractive material has not yet been applied; optical substrate (2) in plane A is arranged with grating elements (3) coated with a material of high refractive index (5), indicating grating period $p_g$

and main direction of light diffraction A'; coating (5) shows an asymmetry with respect to normal plane B.

Figure 4 shows a cross section of embedded grating coupler of period $p_g$ comprising the HRI material (5) arranged in rectangular asymmetric form with vertical jamb of height t and thickness $d_s$, and horizontal jamb of width w and thickness $d_t$, embedded in the core layer (101).

Figure 5 (a) shows a schematic cross section of the light collecting element with 2 grating couplers of period $p_g$ and width L (separated by the distance P-L; fill factor L/P), which are embedded in the core layer (101), with upper cladding (102) and lower cladding (103) and additional light concentrator (109) on top.

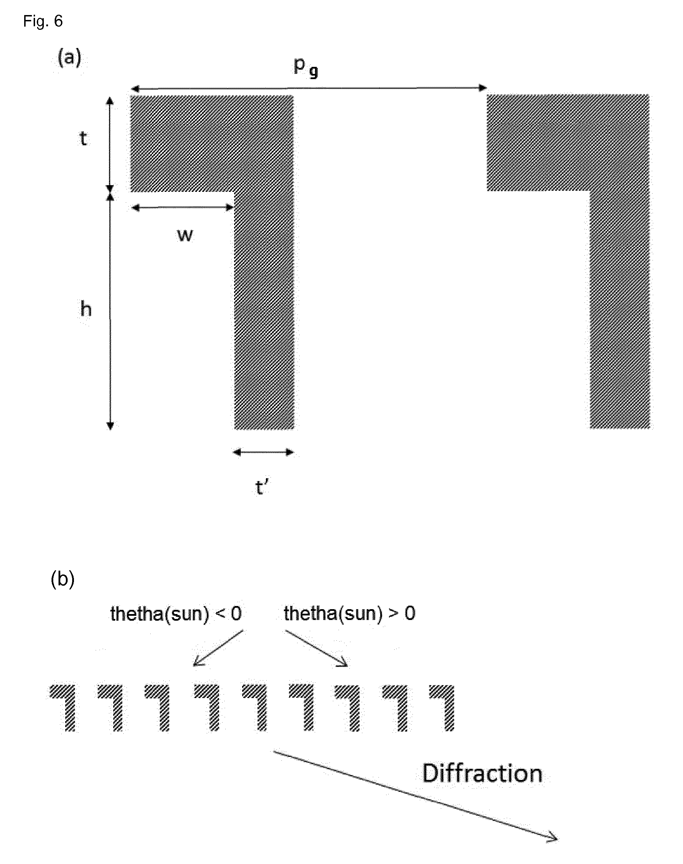

Figure 6 shows a schematic cross section of the coupler manufactured in accordance with example 1 (a, upper part) and the main diffraction pathway (b, lower part).

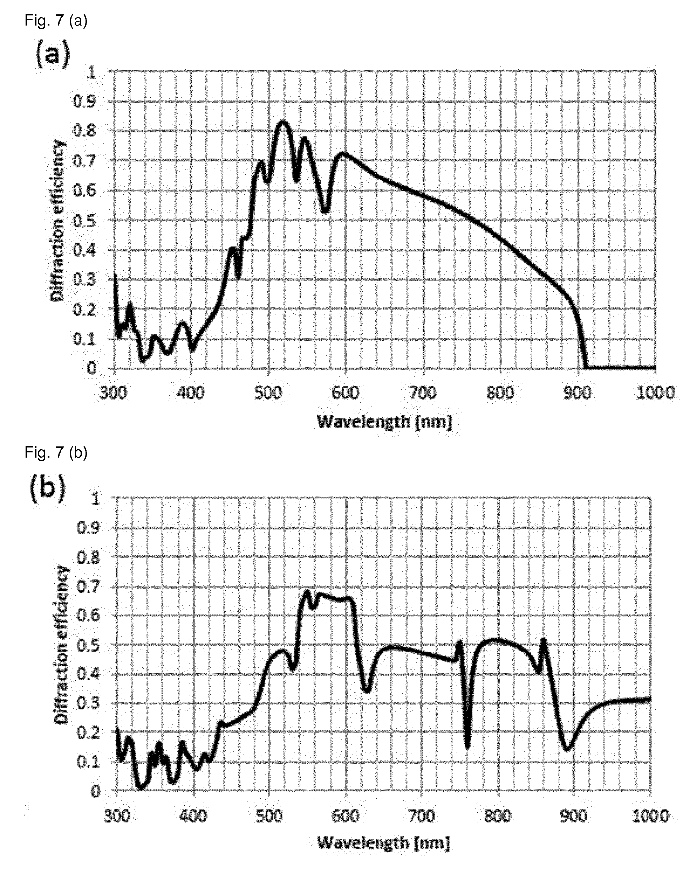

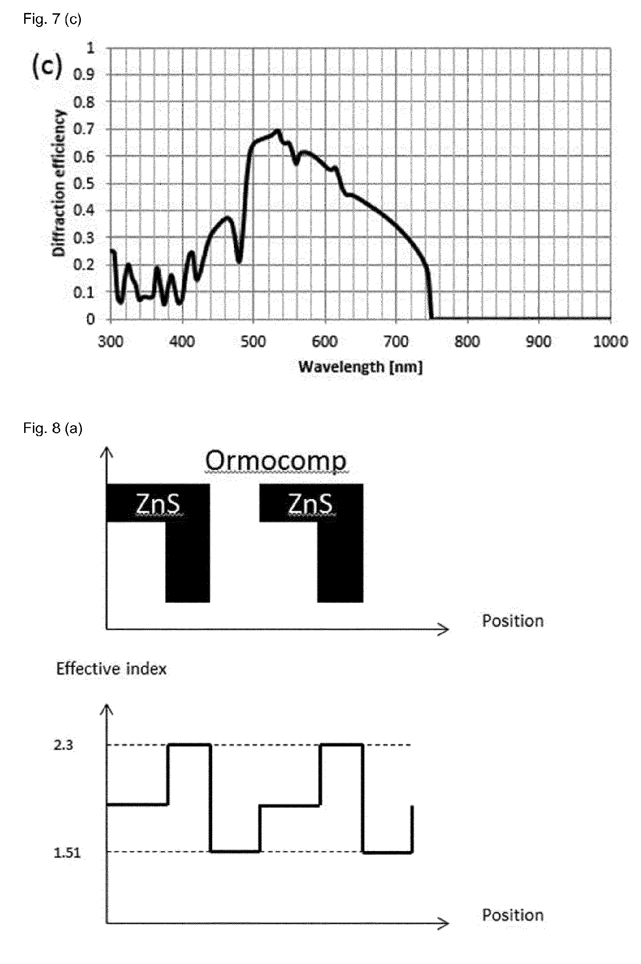

Figure 7 shows the intensity of light in-coupled by +1st order diffraction (Y-axis, 1st order transmission, value 1 denoting 100% of incident light) under conditions of vertical light incidence (0°, Fig. 7a), and incidence under-10° (Fig. 7b) and +10° (Fig. 7c) angle thetha(sun). The parameters (explained in Figure 6) are $p_g$=610nm, h=350nm, t=220nm, w=213nm, t'=110nm. The high index material (5) is ZnS and the (surrounding) material has a refractive index $n_w$ of 1.49.

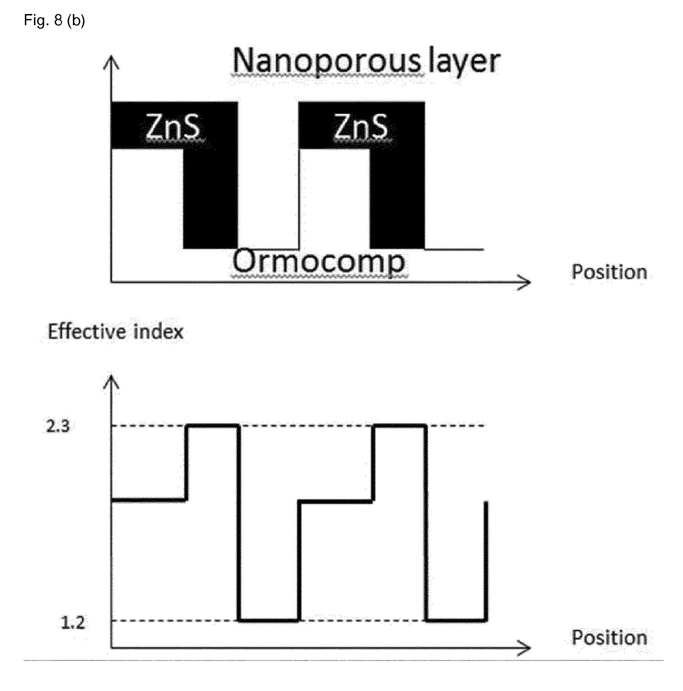

Figure 8 compares the effective refractive indices (lower graphs) obtained with coupler embedded in the core layer (a) and coupler positioned on top (b) of the core layer (core layer is from a material of medium refractive index, in both figures 8 a and b denoted as "ormocomp"); coupler HRI material (5) is ZnS.

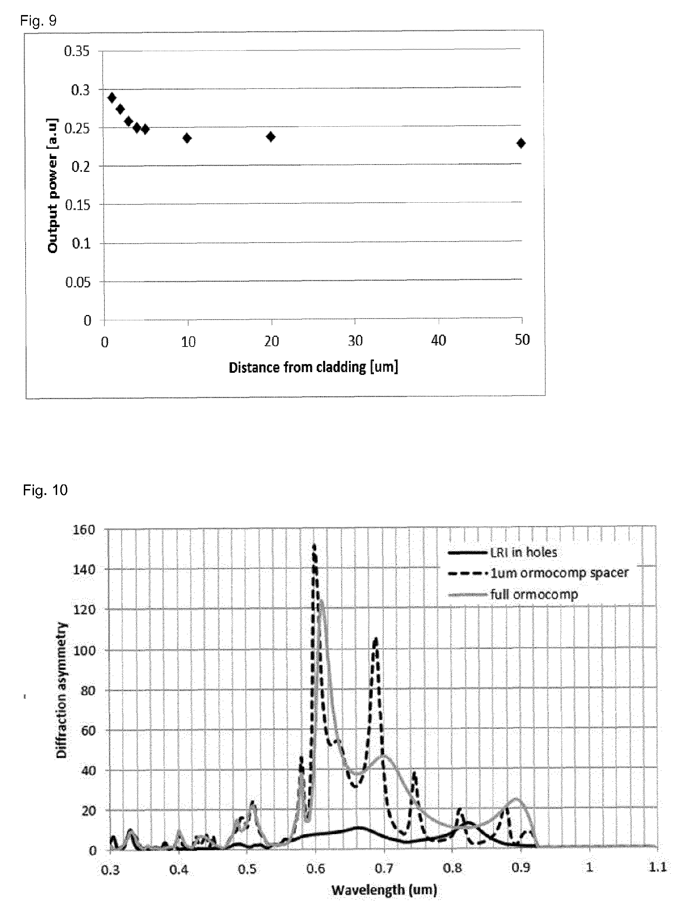

Figure 9 shows the intensity of in-coupled light (Y-axis: output power given in arbitrary units) as a function of the embedding depth (top layer thickness = distance from cladding; [um] in Fig. 9 and Fig 10 stands for micrometer).

Figure 10 shows the diffraction asymmetry, defined as the ratio of the +1 st order diffraction efficiency to the -1st order efficiency calculated with RCWA. Three different cases are investigated: 1) when the low refractive index material (LRI) is directly above the ZnS coating (black line), 2) when there is a further coating of ormocomp of 1 micrometer thickness between the ZnS and the LRI (dotted line), and 3) when the device is fully encapsulated (> 6 micrometer) with ormocomp (grey line).

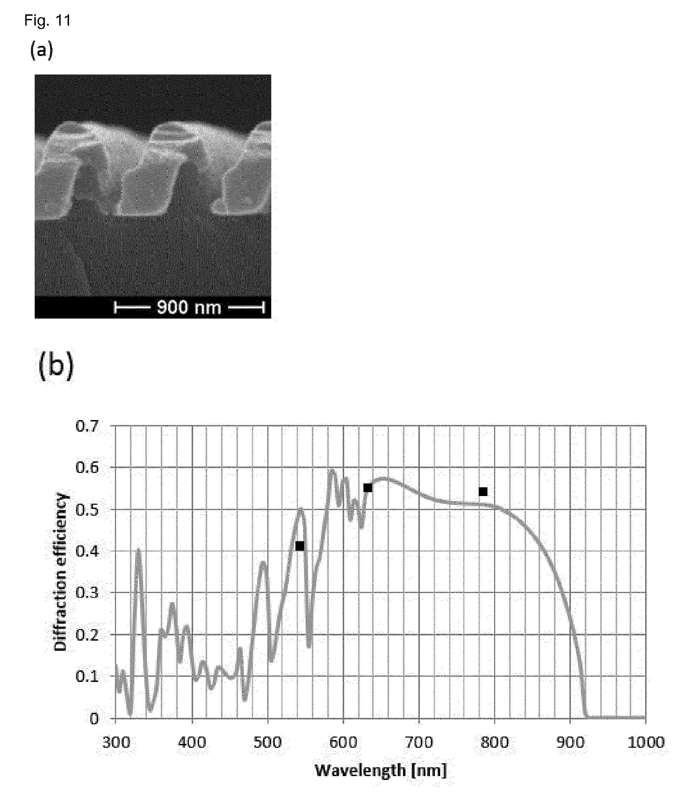

Figure 11 shows a practical realization of a coupler. Fig. 11 a shows a scanning electron micrograph of a non-embedded grating with ZnS coating. Fig. 11 b shows numerical calculations based on the profile of Fig. 7a with the RCWA method (grey solid line) and measurement (dots) of the corresponding diffraction efficiency.

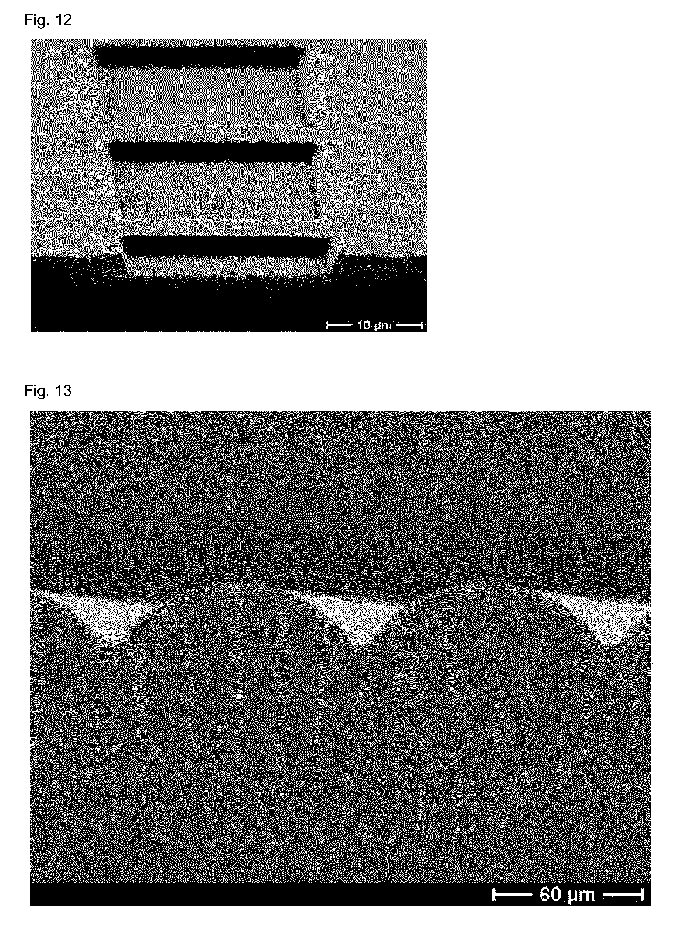

Figure 12 shows a practical realization of an array of couplers with a rectangular geometry according to Fig. 2c.

Figure 13 shows a practical realization of microlenses as primary concentrator elements.

Further components and uses:

The system preferably includes a primary light concentrator element. The primary light concentrator element may be protected with an antireflective coating. The system may additionally include a secondary light concentrator element.

Advantageously, the aperture of the incident radiation is tuned by means of a concentrator placed on top of the upper cladding (102), see (109) in Fig. 5. The concentrator, e.g. an array of microlenses arranged to focus incoming light onto the grating couplers, which thereby may be designed with a small width L and correspondingly small fill factor. L/P (see Fig. 5). The microlenses may be embedded in the LRI layer and covered with an encapsulation material (e.g. optical polymer, glass, or both). LRI on top of lenses guarantees index contrast and refraction from lenses (the LRI layer thus is not an antireflective coating).

A preferred light concentrator element (109), arranged on top of the upper cladding (102), comprises an array of microlenses, wherein each microlense focuses incoming light onto one coupler. Form and size of the microlenses thus is arranged in accordance with the chosen form and size of the coupler, and the fill factor.More details for the manufacturing of the microlenses are given below. They are designed to track the path of sunlight concentrated by the primary concentrator across daytime and seasons. The design can vary depending in particular on the region of the globe and the orientation of the collector.

The light collection and concentration system of the invention thus generally comprises an area (A) containing a section of light collecting with an area of light incidence (A1), where light enters the light transport structure and the one or more grating couplers (104) are arranged, and optionally a section of light propagation and/or light dissipation, where in-coupled light is guided towards the end of the structure, where it is harvested, e.g. for purposes of illumination or power generation by photovoltaic cells. These sections of light propagation, dissipation, harvesting may be arranged on both sides of section A1 or, as depicted in Figure 2, only on the side of preferred light propagation A'. The area of light collecting typically extends, in direction of light propagation A', over one or more millimeters up to about 3 meters; advantageously, this area extends in direction A' over a length ranging from about 10 to about 1000 mm, e.g. from 20 to 500 mm ($L_{tot}$). Light thus collected is guided in direction A', leaves the collecting section, and enters the section of light propagation or exits the structure. One of the advantages of the present system is the opportunity to guide light in a desired bandwidth towards an appliance such as a photovoltaic cell.

As noted above, a preferred direction of light propagation A' may be achieved by asymmetric grating couplers described above, or by arranging a reflector at the end of the light transport structure opposite to the preferred direction of light propagation A', or by a combination of both these measures.

The section of light propagation thus may be of various dimensions and length and may extend, for example, in direction of main propagation up to several meters, e.g. from 0 to 10m, preferably from 5mm to about 5000mm. The structure can be bent with an angle that is small enough so that the rays can be guided by total internal reflection on the cladding. The guiding layer (core layer) may be narrowed in order to increase further the concentration; in this case, the refractive index of the core layer is advantageously increased, preferably in small steps or gradually e.g. from about 1.5 to about 1.8, in order to minimize the optical losses.

The cladding (102) is made of a material with a low refractive index (not air, index between 1.05 and 1.40). The refractive index of the cladding should be as low as possible in order to have a high coupling bandwidth. It has a thickness typically larger than the wavelength of visible and NIR light (>1000nm) in order to avoid evanescent decoupling, and below 200 micrometer, i.e. a thickness typically ranging from 1 to 100 micrometer, in order to ensure a sufficiently high transmission.

Thus, for effective in-coupling of sunlight coupled in from vertical irradiation on plane A, and propagated e.g. into direction A' may, with wavelength between 300 and 900 nm, period $p_g$ and refractive indices $n_c$ of the cladding and $n_w$ of the light transport structure generally are arranged to satisfy the condition:

$$300 \text{ nm} < 0.5\, p_g\,(n_w + n_c) < 900 \text{ nm},$$

In cases where the present system is exposed to the sun under a flat angle (i.e. thetha(sun) $\theta_{sun}$, as indicated e.g. in Fig. 5a is distinctly larger than zero, especially larger than 30°), preferably the following condition applies:

$$300\text{nm} < 0.5\, p_g\,(n_w + n_c - 2\sin\theta_{sun}) < 1100\text{nm}$$

where $\theta_{sun}$ is the angle between the normal to the collector and the incidence direction of the solar radiation for which the irradiance is maximal (Fig. 5a). This angle ranges approximately from -10° to 10° for a roof-top collector, and from 40° to 60° for a collector attached to a facade element.

Further, given an orientation angle alpha (measured in °) of the concentration system with respect to the earth surface (i.e. a concentration system parallel to the earth surface having alpha = zero), $p_g$, $n_w$ and $n_c$ are typically arranged to satisfy the condition:

$$300 \text{ nm} < 0.5\, p_g\,(n_w + n_c - 2\sin(alpha - 40°) < 1100\text{nm}$$

Due to internal reflectance of in-coupled light at the outer surfaces (101 a, 101 b) of the light transport structure, this structure may function as a light guide, thus allowing light to get directed towards an appliance such as a photovoltaic (PV) cell. PV cells are relatively small in size and typically combined into a physically integrated PV module, or solar module, having a correspondingly higher power output. PV modules are generally formed from 2 or more "strings" of PV cells, with each string consisting of a plurality of PV cells arranged in a row and electrically connected in series using tinned flat copper wires, also known as electrical connectors, tabbing ribbons or bus wires. Because the PV cells are fairly small and cover only part of the total surface area of the module, the present light collectors may be positioned on the module between the single PV cells, thus guiding additional light onto the cells and improving the efficiency of the module. To achieve this, present light collection system, e.fg. as shown in Fig. 2, is placed with its light collecting area A1 between the PV cells of the module, while the light guiding section A2 is positioned towards the PV cell or on the PV cell.

A further aspect of the invention thus is the method of preparing the solar modules. The method includes providing a plurality of solar cells arranged on a support substrate and connected by tabbing ribbons, providing a light collecting system as described above, and attaching it to the areas between the solar cells and optionally at the border of the solar module outside of the cell area.

Besides its use for producing electricity, solar light can be used for the direct photocatalytic generation of fuels such as e.g. hydrogen or methane as renewable energy source or for the indirect generation of fuels via plant or algae growth. Solar light can also be used for thermal energy generation. Furthermore, the solar light can be directly used instead of being converted into electricity or fuels. For example, solar light can be used for the photocatalysis of chemical reactions or for the generation of biomass e.g. in greenhouses, bioreactors or plant factories. For example, solar light can be used for the generation of steam which in turn can be used e.g. for water purification or disinfection. For example, direct use of the solar light as an indoor illumination by collecting the solar light by a light-collecting device installed on a rooftop or façade of a building and transmitting the solar light inside the building using light guide has been suggested. The direct use of the solar light transmitted from the rooftop or façade as an indoor illumination may greatly reduce electricity consumption. However, in general, natural lighting is insufficient to be used inside the building and thus artificial illuminations are used even in the daytime. Therefore, the light collection and concentration system according to the invention may be used in any of these applications.

An embodiment of the invention is directed to a light collection and transport system as described above, where light enters at a light collecting element and gets directed through a light transporting structure towards an exit end of the transport structure. The system includes a light transport structure extending in the desired direction of light transport. The light transport structure comprises a core material for light transport (i.e. the light transport structure), and a cladding reducing or preventing undesired outcoupling of propagating light striking the core wall. The cladding comprises a reflective layer and/or a layer of a material having an index of refraction distinctly lower (LRI material) than the index of refraction of the core material.

Abbreviations and Symbols

$n_c$     is the refractive index of the cladding,
$n_w$     is the refractive index of the light guide,
$\lambda$     is the wavelength of in-coupled light,
$p_g$     is the grating period of the grating coupler,
P     is the (average) repetition period of neighbouring grating couplers,
A     is the total area of the present light collection and concentration system,
A1     is the fraction of A covered by light collecting elements comprising grating couplers,
A2     is the fraction of A
HRI     high refractive index
LRI     low refractive index
EVA     ethylene vinyl acetate polymer

Manufacturing

Origination of gratings (embossing tool): Interference lithography may be used to pattern a photoresist on top of a quartz or silicon substrate. The photoresist is developed and the pattern is transferred to the substrate by etching. The result of the development step may be a continuous surface relief structure, holding, for example, a sinusoidal or rectangular cross section or a cross section of a combination of several sinusoidal and/or rectangular cross sections of the obtained grating. Resists that are exposed to electron beams or plasma etching typically result in binary surface structures, typical for a rectangular form of the cross-section. Continuous and binary surface relief structures result in very similar optical behaviors. By a galvanic step the typically soft resist material then may be converted into a hard and robust metal surface, for example into a Nickel shim. This metal surface may be employed as an embossing tool.

Microlense concentrator (109): Mask photolithography is used to expose areas of a photoresist layer on top of a quartz substrate. The photoresist is developed and heated. With this reflow process, the remaining area of photoresist acquires a curvature when exposed to high temperatures. The height, position and curvature of the obtained microlenses can be controlled. By a galvanic step the typically soft resist material then may be converted into a hard and robust metal surface, for example into a Nickel shim. This metal surface may be employed as an embossing tool.

Approach 1: A substrate sheet or tape made of a medium refractive index material serves as the lower part of the core layer. An array of grating couplers is prepared from the nickel shim of a homogeneous grating. Mask photolithography is used to replicate in a sol-gel material on particular areas on top of a quartz or silicon substrate. The device thus obtained is an array of gratings separated from each other (an example is shown in Figure 12). A galvanic step is used to convert the array into a nickel shim. A UV replication using the the nickel shim is performed on a UV cured polymer material onto the substrate. UV cured polymer materials, films as well as grating structures as obtained after replication, typically have a thickness of 1-100 micrometers, especially 3-20 micrometers. Alternatively, replication can be effected by hot embossing at a temperature preferably above the substrate's glass transition temperature; this technique is especially effective on substrates like PET, PMMA and especially PC. With this embossing tool providing the master surface, a medium in form of a polymer layer or foil can be embossed. An asymmetric coating of a high refractive index material such as zinc sulphide is applied by directed deposition under an oblique angle. This is typically achieved by exposure of the grated substrate to material vapor under an oblique angle (e.g. 30-60°) with respect to the plane of the substrate. An example of such grating is shown in Figure 11 (a). The diffraction efficiency has been measured above 50% for wavelengths at least between 600nm and 800nm, which is not possible with a non-oblique deposition of the ZnS. The deposition is typically effected on top, and on one or two sides of the grating. An encapsulation of the grating by a medium refractive index material, e.g. using a thick layer of UV cured polymer material. This coating should also act as a planarization layer for the next processing steps. Then, a coating of a low refractive index material is performed, with finally the UV replication of microlenses in a UV cured polymer material (an example is shown in Figure 13). Tolerances on the alignment between the microlenses and the gratings are relatively high because the gratings cover about 10% of the pitch of the microlenses. The alignment between the microlenses and the gratings can be done optically using metallized alignment marks on the side of the foil. A misalignment between the microlenses and the gratings can occur due to a poor match between the alignment marks of each layers. A misalignment of +/- 10% of the pitch of the microlenses, corresponding to half the area covered by the gratings, has low impact on the performance.

The present invention thus includes a process for manufacturing a light collection and concentration system as described above, which process comprises the steps of

a) providing an optical substrate of medium refractive index $n_w$,

b) structuring a fraction of one surface (A1) of said optical substrate with a grating of period $p_g$ from the range 200 to 1000 nm, especially 200 to 700 nm,

c) applying a coating material (5) selected from dielectrics of high refractive index and metals on said fraction of one surface comprising the grating, for example by means of vapor deposition covering the rest of the surface, possibly using a mask,

d) covering the surface modified in step c by a polymer layer of medium refractive index $n_w$, which typically is a layer index-matching with the one of the optical substrate, in a thickness ranging from 0.1 to 5 micrometer, especially 0.4 to 3 micrometer, to obtain an upper surface (101 a), and

e) covering said upper surface (101a) with a layer of low refractive cladding material (102) of refractive index $n_c$.

Approach 2:

The microlenses are replicated in a UV cured polymer material on a thin substrate such as a polymer film of 5 to 300 micrometers thickness. On the other side of the substrate, a coating with a low refractive index material is performed. Then, an array of grating couplers is replicated in a UV cured polymer material of thickness typically in the range of 3-20 micrometers through the microlenses. The replication of gratings through the lens is such that the nanostructures will remain only at the focal point of the lenses (often referred to as "self-alignment"). An oblique deposition of a high index material such as zinc sulfide is then performed. Finally, a coating of a medium index material is performed and will serve as the core layer of the lightguide.

Example of self-alignment:

Square microlenses with pitch 100 micrometer in two directions are replicated on a transparent polymer foil of thickness 200 micrometer using a UV curable material transparent in the visible range. A shim with uniform coverage of a grating of period 610 nm is placed on the other side of the substrate. A UV curable material is dispensed between the substrate and the grating and exposed to UV light through the microlenses, leading to a non-uniform exposure. After cleaning the exposed layer with a solvent, only the area aligned with the center of the microlenses remains, while the rest is rinsed away.

Materials

The material of medium refractive index $n_w$ forming the core layer or core layers essentially consists of a material of medium refractive index, typically selected from thermoplastic polymers (optical quality = low haze) or polymers curable by radiation or heat, or or silica-based materials like common flint or crown glass, quartz, fused silica, borofloat. Many of these materials (optical substrates) have refractive indices close to 1.5, for example from the range 1.45 to 1.65, commonly from the range 1.45 to 1.60. Where the light transport structure is formed by more than one material, these materials advantageously are chosen to show similar or same refractive index ("index matching") to avoid light reflection at the interface between both materials. Examples for polymeric materials are polycarbonate, polyacrylics such as PMMA, polyvinylbutyral, silicone polymers, polyimide, polystyrene, styrene acrylonitrile, polyamide, polyetherimide, polysulfone, cyclic olefin copolymer. Optical quality of some polymers such as polyethylene (PE) or polypropylene (PP) can be improved by addition of clarifiers. Radiation-curable compositions generally are based on (and consist essentially of) oligomers and/or polymers, which comprise moieties capable to undergo crosslinking reactions upon irradiation e.g. with UV light. These compositions thus include UV-curable systems based on oligomeric urethane acrylates and/or acrylated acrylates, if desired in combination with other oligomers or monomers; and dual cure systems, which are cured first by heat or drying and subsequently by UV or electron irradiation, or vice versa, and whose components contain ethylenic double bonds capable to react on irradiation with UV light in presence of a photoinitiator or with an electron beam. Radiation-curable coating compositions generally are based on a binder comprising monomeric and/or oligomeric compounds containing ethylenically unsaturated bonds (prepolymers), which, after application, are cured by actinic radiation, i.e. converted into a crosslinked, high molecular weight form. Where the system is UV-curing, it often contains a photoinitiator as well. Corresponding systems are described e.g. in Ullmann's Encyclopedia of Industrial Chemistry, 5th Edition, Vol. A18, pages 451 453. 15 Examples are UV-curable resin systems of the Lumogen series (BASF), such as Lumogen® OVD 301. The radiation curable composition may, for example, comprise an epoxy-acrylate from the CRAY-NOR@ Sartomer Europe range (10 to 60%) and one or several acrylates (monofunctional and multifunctional), monomers which are available from Sartomer Europe (20 to 90%) and one, or several photoinitiators (1 to 15%) 20 such as Darocure® 1173 and a levelling agent such as BYK®361 (0.01 to 1 %) from BYK Chemie. A further example is Ormocomp UV curable hybrid polymer based on ormocer (organically modified ceramics) by micro resist technology GmbH, Berlin.

The low reflective cladding layers (102, optionally 103) are made from low refractive material of refractive index $n_c$; this material can be homogeneous such as MgF2, crystalline or amorphous. It can also be a nanoporous material with a low effective refractive index. The low refractive index material typically is selected from transparent or translucent porous materials, typically with index-matching properties, e.g. comprising suitable dielectric particles such as silicon dioxide or alumina in a suitable binder, such as materials disclosed inter alia by Wicht et al. (Macromolecular Materials and Engineering 295, 628 (2010)), and/or low refractive index materials such as $MgF_2$ or fluoropolymers. The low refractive cladding may also consist of a multi-layer interference system having alternating layers of a low refractive index material and further material, which may be a material of medium refractive index as noted above or of high refractive index as noted below.

The reflective layer (103) and the optional reflector (109) typically is a metallic layer or metal composite layer, wherein the metallic film or foil is laminated to the structure, or applied by vapour deposition, or applied as an ink or laquer containing dispersed metal flakes or particles to obtain a reflective composite coating; metallic materials preferably are silver, aluminum, gold, tin, or suitable alloys.

The high refractive index coating material (5) may be an organic polymer containing sulphur, nitrogen and/or aromatics. Polymer materials of such classes are disclosed, for example, in document of Higashihara and Ueda (Macromolecules 2015, 48, 1915). The material (5) may also be an inorganic material selected from metal chalcogenides and metal nitrides, preferably of the metals Al, In, Ga, Si, Sn, Ce, Hf, Nb, Ta, Zn, Ti, Zr, and/or binary alkaline chalcogenides and binary nitrides, preferably of the above metals, especially oxides, nitrides, sulphides. Typical materials include oxides and alkoxides of titanium and/or zirconium such as titanium dioxide (anatase) and zirconium dioxide, zinc sulphide, indium oxide, tungsten oxide such as tungsten trioxide, zinc oxide, $Ta_2O_5$, $LiTaO_3$, $SnN$, $Si_3N_4$, $Nb_2O_5$, $LiNbO_3$, $CeO_2$, $HfO_2$, AlN.

The material (5) may also be a hybrid material composed of an organic polymer containing nanoparticles of an inorganic material to form a nanocomposite. Preferably, nanoparticles are made up of an inorganic material as listed above. The organic polymers may be as noted above, or other organic polymers as noted above for the material of medium refractive index. Finally, the material (5) may be a hybrid material composed of an organic polymer modified with an inorganic high refractive index material, such as Zr(O)- or Ti(O)-modified polyvinylalcohol (hybrid polymers). Polymer materials of such classes are disclosed, for example, by Lü and Yang (J. Mater. Chem., 2009, 19, 2884).

If a metal is chosen for the coating (5), this is typically selected from substances showing metallic conductivity and generally able to interact with light through a surface plasmon or polaron mechanism. Besides metals, semiconducting materials such as silicon (Si), indium tin oxid (ITO), indium oxide, Aluminum doped zinc oxide (AZO), Gallium doped zinc oxide (GZO) and similar materials thus may be used. Especially preferred is silver. The metallic coating (5) is interrupted and of low thickness, such that reflection of incident light is avoided; the term "interrupted" herein relates to the periodicity of the underlying grating, essentially without metallic conductivity between 2 or more interrupted sections of said layer, while there is metallic conductivity within the non-interrupted stripes or sections of this layer.

Coating material (5) of special technical importance is zinc sulphide or metallic silver.

Example 1: Asymmetric coupler

The coupler is a periodic asymmetric coating of the high index material zinc sulphide embedded in the polymer core layer, where each individual element of high index material are spatially separated. The geometry of the coupler, with parameters, is represented by Fig. 6 (a). Fig. 6 (b) represents the incidence conditions (light incidence under negative or positive angle $\theta_{sun}$) and the diffraction direction (A').

The aspect ratio $w/p_g$ as shown in Fig. 6 (a) typically ranges from 0.25 to 0.75, and $h/p_g$ typically ranges from 0.5 to 3; the thickness of the high index material ($d_t$, $d_s$ in Fig. 4; or t, t' in Fig. 6a) is normally limited by manufacturing conditions, and typically ranges from 50nm to 250nm in case of a dielectric material, and from 1nm to about 75nm in case that a metal (such as silver) is applied as the HRI material.

In this example, the period $p_g$ is 462 nm; height and thickness of vertical limb are h = 275 nm and t' = 59 nm; width of horizontal limb (in direction of diffraction) w is 162 nm and thickness of horizontal limb is t= 176 nm. The coating is ZnS and the surrounding material is a UV cured composite of refractive index 1.49. Firures 7 (a), (b) and (c) show the first order diffraction efficiency of the coupler calculated numerically using the rigorous coupled wave analysis (1st order transmission efficiency) for incidence angles (thetha(sun)) of 0°, -10° and +10°, respectively. This efficiency can go above 50% because more light is diffracted into the +1st order that into the -1st order.

The wavelength range of diffraction varies as a function of the incidence angle. As the incident light is focused from a lens, it has a given aperture angle, which will induce a mixture of diffracted spectra. The infra-red light above the wavelength of 800nm is not diffracted, which implies that it will not be concentrated.

The effect of the embedding of the coupler is shown by Fig. 8: The wave front of the light undergoes different phase shifts as a function of the position along the grating, which depends on the effective refractive index of the grating. The distribution of the effective refractive index is shown below in Fig. 8 for the case that ZnS is encapsulated by a homogeneous material of medium refractive index (e.g.ormocomp, left) or when it is positioned directly at the interface (101 a) to the upper cladding material (low refractive index, right side of Fig. 8). For the homogeneous environment (left side of Fig. 8), the distribution of refractive index is an asymmetric function of the position, which shows that one order of diffraction becomes more efficient than the other. In the other case (right side of Fig. 8) with the coupler at the interface (101 a), the distribution of the refractive index is closer to the one of a binary grating: in other words, the system is more symmetric, and diffraction into preferred direction A' becomes less efficient.

From the previous paragraph, it can be concluded that the diffraction efficiency is increased if the distance between coupler (104) and the LRI cladding (101) increases. However, placing the grating couplers further away from the cladding also results in increased decoupling during guiding.

Ray tracing simulations with Zemax OpticsStudio 14.2 SP1 from Zemax LLC, have been performed for a waveguide with an array of couplers. Couplers are positioned in an array every 100 micrometer, and have a width of 5 micrometer each. Light is coupled inside the first coupler and the power at the output of the waveguide after 10 cm is computed as a function of the spacing between the couplers and the cladding. The results are shown in the following table.

| Distance [$\mu$m] | Output power [a.u.] |
|---|---|
| 5 | 0.248 |
| 4 | 0.25 |
| 3 | 0.259 |
| 2 | 0.274 |
| 1 | 0.289 |
| 10 | 0.236 |
| 20 | 0.237 |
| 50 | 0.227 |

It can be seen that, when the distance between the coupler and the cladding decreases, the guiding efficiency increases. Simulations with the rigorous coupled wave analysis (following the method of Moharam et al. J. Opt. Soc. Am. A vol. 12, p 1068) in Figure 9 show, that a distance which optimizes simultaneously the directed in-coupling by an asymmetric coupler and the guiding efficiency is within the range 0.1 to 5 micrometer, especially 0.4 to 3 micrometer, of top layer thickness (c in Fig. 1).

Example 2 (photovoltaic cells):

The following table considers different designs based on the choice of a grating period $p_g$ and incident aperture $\theta_i$ (see Fig. 5, or description of concentrator below), for a given core index of 1.49, immersion index $\theta_1$ of 1.49 and cladding index of 1.2. Three different PV technologies are considered, namely cSi, aSi and CIGS. For each of these technologies, the system is designed in such a way that the wavelength band of the coupled rays matches the EQE band of the absorber.

| PV technology | Min wavelength (EQE) | Max wavelength (EQE) | Bandwidth (EQE) | Period [nm] | Aperture | Min wavelength (design) | Max wavelength (design) | Bandwidth (design) |
|---|---|---|---|---|---|---|---|---|
| cSi | 350 | 1150 | 800 | 560 | 23° | 346 nm | 1160 nm | 814 nm |
| aSi | 380 | 750 | 370 | 420 | 12° | 374 nm | 756 nm | 382 nm |
| CIGS | 350 | 1050 | 700 | 520 | 21° | 346 nm | 1052 nm | 706 nm |

Cutting the wavelengths that are not necessary for harvesting can be an advantage because it reduces heating of the PV cell and degradation of its efficiency (-0.5%/K). This approach can also be used if a specific color needs to be concentrated, while other colors are transmitted through the device. For instance, a device could be placed on green houses: it couples and guide the green light that is not necessary for the plants to the edge of the foil where it is harvested by a PV cell.

**Claims**

1. Light collection and concentration system comprising a light transport structure (101), which light transport structure comprises a layer or a multitude of layers of a material of medium refractive index $n_w$ sandwiched between an upper layer of low refractive cladding material (102) and a lower reflecting surface (101 b), where the low refractive cladding material is of refractive index $n_c$, and which light transport structure further comprises one or more grating couplers (104) embedded in its material of medium refractive index $n_w$, wherein each grating coupler comprises a diffraction grating (3) of the period $p_g$ covered by a coating material (5), which coating material is selected from dielectrics of high refractive index and metals, **characterized in that** the grating couplers comprising the coated gratings are embedded by a top layer thickness from the range 0.1 to 5 micrometer, especially 0.4 to 3 micrometer.

2. Light collection and concentration system, especially according to claim 1, comprising a light transport structure (101), which light transport structure comprises a layer or a multitude of layers of medium refractive index $n_w$ sandwiched between an upper layer of a material of low refractive index $n_c$ (102) and a lower reflecting surface (101b), which light transport structure further comprises one or more grating couplers (104) embedded in its material of medium refractive index $n_w$, wherein each grating coupler comprises a diffraction grating (3) of the period $p_g$ covered by a coating material (5), which coating material is selected from dielectrics of high refractive index and metals, **characterized in that** $p_g$, $n_w$ and $n_c$ are arranged to satisfy the condition

$$300 \text{ nm} < 0.5 \, p_g \, (n_w + n_c) < 1100 \text{ nm}.$$

3. Light collection and concentration system of claim 1 or 2, wherein the reflecting surface (101b) results from a material in contact with the light transport structure (101), which is a reflector layer (103), such as a metal reflector, or is a layer (103) of a material of low refractive index $n_c$, or is the ambient atmosphere.

4. System of claim 1, 2 and/or claim 3, wherein the difference in refractive index between the medium refractive index material $n_w$ and the material of low refractive index $n_c$ is from the range 0.2 to 0.7.

5. System of claim 1, 2, 3 and/or 4, wherein diffraction grating (3) of the period $p_g$ is asymmetrically covered by coating material (5).

6. System according to any of the foregoing claims, wherein the medium refractive index is from the range 1.4 to 1.8, the low refractive cladding material has a refractive index from the range 1.05 to 1.3.

7. System according to any of the foregoing claims, wherein the coating material (5) is selected from silver metal and from dielectrics of refractive index from the range 1.9 to 2.3 such as ZnS.

8. System according to any of the foregoing claims, wherein the fraction of the area of light collection (A1) comprising couplers (104) ranges from about 1 to about 50%, preferably from 2 to 50%, for example from about 5 to about 40%.

9. System according to any of the foregoing claims comprising a light concentrator (109) on top of cladding layer (102) focusing vertically incident light on the couplers (104), which light concentrator (109) is preferably an array of microlenses.

10. System according to any of the foregoing claims, wherein the material of medium refractive index $n_w$ is selected from glass, thermoplastic polymers, or polymers curable by radiation and/or heat, or an index-matching combination of such materials.

11. System according to any of the foregoing claims, wherein the material of low refractive index $n_c$ is selected from porous materials, typically comprising suitable dielectric particles such as silicon dioxide or alumina in a suitable binder.

12. System according to any of the foregoing claims, wherein a section of the light guide (A2) is in optical contact with a photovoltaic cell.

13. System according to claim 9, which comprises a light concentrator (109) in form of an array of microlenses, and on top of said microlenses additionally a layer of a material of low refractive index $n_c$ providing a flat surface, and on top of said material of low refractive index a protective film and/or glass sheet.

14. Process for manufacturing a light collection and concentration system according to any of claims 1 to 13, which process comprises the steps

a) providing an optical substrate of medium refractive index $n_w$,

b) structuring a fraction of one surface of said optical substrate with a grating of period $p_g$ from the range 200 to 700 nm,

c) applying a coating material (5) selected from dielectrics of high refractive index and metals on said surface, or a fraction thereof comprising the grating, for example by means of vapor deposition, optionally under an oblique angle and/or covering the rest of the surface with a mask,

d) covering the surface modified in step c by a polymer layer of medium refractive index $n_w$, preferably in a thickness ranging from 0.1 to 5 micrometer, especially 0.4 to 3 micrometer, to obtain an upper surface (101a), and

e) covering said upper surface (101a) with a layer of low refractive cladding material (102) of refractive index $n_c$.

Fig. 1

Fig. 2

(a)

104    A

A1    A2

⇒A'

(b)

(c)

(d)

(e)

Fig. 3

Fig. 4

Fig. 5

(a)

Fig. 6

(a)

(b)

thetha(sun) < 0     thetha(sun) > 0

Diffraction

Fig. 7 (a)

Fig. 7 (b)

Fig. 7 (c)

Fig. 8 (a)

Fig. 8 (b)

Fig. 9

Fig. 10

Fig. 11

(a)

900 nm

(b)

Fig. 12

Fig. 13

Europäisches
Patentamt

European
Patent Office

Office européen
des brevets

## EUROPEAN SEARCH REPORT

Application Number

EP 16 16 7762

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/203663 A1 (PRATHER DENNIS [US] ET AL) 25 August 2011 (2011-08-25)<br>* abstract * *<br>* paragraphs [0055] - [0060], [0069] - [0073] *<br>* table 1 *<br>* figures 1-5,10 *<br>* claim 1 * | 1,3-14 | INV.<br>H01L31/054<br>G02B5/18<br>F21V8/00<br>H02S40/22 |
| X | US 2015/168651 A1 (NISHIWAKI SEIJI [JP]) 18 June 2015 (2015-06-18)<br>* abstract * *<br>* paragraphs [0107] - [0162], [0207] - [0210] *<br>* figures 1-18 * | 1,3-12, 14 | |
| X | WO 2013/005746 A1 (ASAHI GLASS CO LTD [JP]; IKEDA YASUHIRO [JP]; SAKAMOTO HIROSHI [JP]; K)<br>10 January 2013 (2013-01-10)<br>* abstract * *<br>* figures 1-7,9-15 * | 1,3-14 | |
| A | US 2016/041335 A1 (APOSTOLOS JOHN T [US] ET AL) 11 February 2016 (2016-02-11)<br>* abstract * *<br>* figure 3 * | 1,3-14 | TECHNICAL FIELDS SEARCHED (IPC)<br>H01L<br>G02B<br>H02S |
| A,D | WO 2015/062641 A1 (SUISSE ELECTRONIQUE MICROTECH [CH]) 7 May 2015 (2015-05-07)<br>* abstract * * | 1,3-14 | |
| A | WO 2015/007580 A1 (BASF SE [DE]) 22 January 2015 (2015-01-22)<br>* abstract * *<br>* figures 1,4-9 * | 1,3-14 | |

~~The present search report has been drawn up for all claims~~

| Place of search | Date of completion of the search | Examiner |
|---|---|---|
| Berlin | 7 October 2016 | Moroz, Alexander |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1(completely); 3-14(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 16 16 7762

The Search Division considers that the present European patent application does not comply with the requirements of unity of invention and relates to several inventions or groups of inventions, namely:

1. claims: 1(completely); 3-14(partially)

   Light collection and concentration system comprising a light transport structure (101), wherein grating couplers comprising the coated gratings are embedded by a top layer thickness from the range 0.1 to 5 micrometer, especially 0.4 to 3 micrometer.

   ---

2. claims: 2(completely); 3-14(partially)

   Light collection and concentration system comprising a light transport structure (101), wherein grating couplers comprising the coated gratings are arranged to satisfy the condition

   $$300 \text{ nm} < 0.5 \text{ pg (nw+ nc)} < 1100 \text{ nm.}$$

   ---

## ANNEX TO THE EUROPEAN SEARCH REPORT
## ON EUROPEAN PATENT APPLICATION NO.

EP 16 16 7762

This annex lists the patent family members relating to the patent documents cited in the above-mentioned European search report.
The members are as contained in the European Patent Office EDP file on
The European Patent Office is in no way liable for these particulars which are merely given for the purpose of information.

07-10-2016

| Patent document cited in search report | Publication date | Patent family member(s) | Publication date |
|---|---|---|---|
| US 2011203663 A1 | 25-08-2011 | US 2011203663 A1<br>WO 2011102956 A2 | 25-08-2011<br>25-08-2011 |
| US 2015168651 A1 | 18-06-2015 | JP 5970660 B2<br>US 2015168651 A1<br>WO 2014199572 A1 | 17-08-2016<br>18-06-2015<br>18-12-2014 |
| WO 2013005746 A1 | 10-01-2013 | JP WO2013005746 A1<br>WO 2013005746 A1 | 23-02-2015<br>10-01-2013 |
| US 2016041335 A1 | 11-02-2016 | NONE | |
| WO 2015062641 A1 | 07-05-2015 | CN 105765421 A<br>EP 3063570 A1<br>US 2016274281 A1<br>WO 2015062641 A1 | 13-07-2016<br>07-09-2016<br>22-09-2016<br>07-05-2015 |
| WO 2015007580 A1 | 22-01-2015 | AU 2014292323 A1<br>CN 105378514 A<br>EP 3022592 A1<br>JP 2016525711 A<br>KR 20160021843 A<br>SG 11201510444S A<br>US 2016170102 A1<br>WO 2015007580 A1 | 07-01-2016<br>02-03-2016<br>25-05-2016<br>25-08-2016<br>26-02-2016<br>28-01-2016<br>16-06-2016<br>22-01-2015 |

For more details about this annex : see Official Journal of the European Patent Office, No. 12/82

## EP 3 240 046 A1

### REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010033859 A
- US 2010278480 A
- US 2012262769 A
- WO 2013005231 A
- WO 2014016343 A
- WO 2015062641 A

**Non-patent literature cited in the description**

- **KARP et al.** *Optics Express,* 2010, vol. 18, 1122
- **BOUCHARD ; THIBAULT.** *Optics Express,* 2014, vol. 22, A248
- **SHIEH ; SU.** *Proc. SPIE,* 2011, vol. 8108, 81080H
- **LÜTOLF et al.** *Optics Letters,* 2014, vol. 39 (23), 6557-6560
- Ullmann's Encyclopedia of Industrial Chemistry. vol. A18, 451-453
- **WICHT et al.** *Macromolecular Materials and Engineering,* 2010, vol. 295, 628
- **HIGASHIHARA ; UEDA.** *Macromolecules,* 2015, vol. 48, 1915
- **LÜ ; YANG.** *J. Mater. Chem.,* 2009, vol. 19, 2884
- **MOHARAM et al.** *J. Opt. Soc. Am. A,* vol. 12, 1068